# EUROPÄISCHE PATENTSCHRIFT

(11) **EP 1 549 928 B1**
(45) Veröffentlichungstag und Bekanntmachung des Hinweises auf die Patenterteilung: **13.12.2006**
(21) Anmeldenummer: 03753529.1
(22) Anmeldetag: 08.10.2003
(51) Int. Cl.: G01N 21/05, G01N 33/487, G01N 21/35

(54) **DÜNNSCHICHTZELLE**
THIN-LAYER SENSOR
CAPTEUR EN COUCHE MINCE

(30) Priorität: 09.10.2002 DE 10247020
(43) Veröffentlichungstag der Anmeldung: 06.07.2005
(73) Patentinhaber: Micro-Biolytics GmbH, 79110 Freiburg (DE)
(72) Erfinder: MASUCH, Ralf, 79098 Freiburg (DE)
(74) Vertreter: Müller-Boré & Partner Patentanwälte
(86) Internationale Anmeldenummer: PCT/EP2003/011126
(87) Internationale Veröffentlichungsnummer: WO 2004/036193

(56) Entgegenhaltungen:
- WO-A-02/057753
- DE-A- 4 137 060
- DE-A- 10 104 957
- DE-C- 19 739 126
- DE-C- 19 909 692

## Beschreibung

Die Erfindung betrifft ein Verfahren zur Herstellung einer Durchflußmeßzelle gemäß Anspruch 1.

Durchflußmeßzellen zur Transmissionsmessung sind in der Infrarotspektroskopie bekannt und etabliert. Bei derartigen Zellen wird die zu vermessende flüssige Probe über Probenzu- und -abführkanäle durch einen optischen Meßraum hindurchgeleitet, welcher durch infratrottransparente Fenster begrenzt wird. Das gemessene IR-Transmissionsspektrum kann beispielsweise durch einen FT-IR Spektrometer (Fourier Transformation Infrarot Spektrometer) ausgewertet werden. Anwendungsabhängig werden verschiedene Ausführungen derartiger Durchflußzellen eingesetzt, welche zerlegbar und nicht zerlegbar ausgestaltet sein können.

Die Schichtdicken solcher Zellen, d.h. der Abstand zwischen den Zellenfenstem, welche den Meßraum begrenzen, in IR-Strahlrichtung, liegen in der Regel zwischen 0,015 mm und mehreren Millimetern. Die Bemessung der Zellenschichtdicke hängt wesentlich von dem IR-Absorptionsverhalten des verwendeten Lösungsmittels ab. Bevorzugt werden schwach absorbierende Lösungsmittel eingesetzt, wie beispielsweise Tetrachlorkohlenstoff oder Kohlenstoffdisulfid.

Wasser hingegen ist aufgrund seiner starken und sich über weite Bereiche erstreckende Absorption im infraroten Spektralbereich ein problematisches Lösungsmittel in der Infrarotspektroskopie. Dies gilt insbesondere im mittleren Infrarotbereich von 4000 bis 400 cm⁻¹, da Wasser beispielsweise bei 1643 cm⁻¹ ein ausgeprägtes Absorptionsverhalten aufweist. Hier kommt es schon bei Schichtdicken von wenigen Mikrometern in bestimmten Wellenzahlenbereichen zur Totalabsorption der IR-Strahlung im Lösungsmittel, so daß diese Bereiche analytisch nicht zugänglich sind. Für viele chemische, biochemische, pharmakologische und physiologisch interessante Substanzen ist Wasser jedoch das natürliche Lösungsmittel. Die Untersuchung wasserlöslicher Substanzen steht in immer stärkerem Maße im Mittelpunkt heutiger naturwissenschaftlicher und industrieller Arbeiten und bilden den Schwerpunkt vieler biologischer, medizinischer und pharmazeutischer Fragestellungen.

Aufgrund des IR-Absorptionsverhaltens von Wasser muß die Zellenschichtdicke von Durchflußzellen für wässrige Proben somit klein gehalten werden, um ein auswertbares Tranmissionssignal zu erhalten. Die zu bevorzugende Schichtdicke für Transmissionsmessungen wässriger Proben wird beispielsweise von K. Rahmelow und W. Huber in Appl. Spectrosc. 51, 160-170 (1997) auf 6 bis 7 µm beschrieben. Wharton et al. beschreibt in "A stopped flow apparatus for infrared spectroscopy of aqueous solutions", daß Stopped-Flow Messungen, die meist zur Untersuchung der Kinetik von Reaktionen eingesetzt werden, mit den notwendigen Schichtdicken von ca. 5 µm (im Artikel fälschlicherweise mit 5 mm angegeben) in Transmissionszellen nicht durchgeführt werden können. Ursache hierfür ist der enorm hohe Strömungswiderstand derartiger Dünnschichtmeßzellen, welcher annähernd umgekehrt proportional zur dritten Potenz der Schichtdicke ist, wodurch bei Schichtdicken von kleiner 10 µm hohe Druckbelastungen entstehen.

Bekannte zerlegbare Durchflußzellen werden bei höheren Drücken undicht und die Gefahr einer Kreuzkontamination der Proben wird erheblich höher. Ferner ist bei diesen Zellen eine gleichbleibende Schichtdicke nach einer Druckbelastung oder nach Demontage nicht mehr gewährleistet. Der Schichtdickenpräzision von zerlegbaren Meßzellen sind ebenfalls durch gegebene Umgebungsbedingungen, wie beispielsweise Staub, natürliche Grenzen gesetzt. Staubpartikel der Luft liegen hauptsächlich in einem unteren Mikrometerbereich, so daß nur unter staubfreien Bedingungen eine hohe Schichtdickenpräzision bei der Erstmontage bzw. bei der wiederholten Montage erreicht werden kann. Reproduzierbare Messungen oder quantitative Bestimmungen sind daher mit großen Ungenauigkeiten behaftet.

Bekannte nicht zerlegbare Durchflußzellen sind meistens aus Silber- oder Bleiamalgam aufgebaut und nur für eine sehr geringe Druckbelastung von maximal 2 bis 3 bar ausgelegt.

Aufgrund der obigen Probleme wurden alternative Meßsysteme zur IR-Charakterisierung wässrigen Proben vorgeschlagen, z.B. in Form von ATR-Techniken (Attenuated Total Reflection), bei denen der infrarotstrahl aufgrund physikalischer Gesetzmäßigkeiten jeweils nur wenige Mikrometer, aber dafür mehrmals, in die Probe eindringt. Nachteilig an dieser Technik ist jedoch, daß die Absorptionen wellenlängenabhängig sind und Grenzflächeneffekte zwischen optischem Material und der Probenflüssigkeit, beispielsweise in Form von Adsorption oder Denaturanz der Probe (Beispiel: Proteine), auftreten können.

In "Spectroscopy of Biological Molecules: New Directions; 8th European Conference on the Spectroscopy of Biological Molecules", 29 August - 2 September 1999, Enschede, The Netherlands, edited by j. Greve, G.J. Puppels and C. Otto, Seiten 689 bis 690 wurde eine Durchflußzelle beschrieben, deren Herstellung eine Kombination von fotolithographischen Strukturierungstechniken zur Definition eines Abstandshalters zwischen zwei IR-transparenten Fenstern mit nachfolgendem Verkleben der Fenster mit einem Epoxy-Klebstoff umfaßte. Fotolithographische Strukturierungstechniken werden in der Mikrosystemtechnik vorzugsweise zur lateralen Strukturierung von fotosensitiven Materialien (Lacke) verwendet. Sie eignen sich weniger zur präzisen, gleichmäßigen und reproduzierbaren Materialabscheidung in Form einer nicht-lateral applizierten Abstandshalterschicht. Dies gilt besonders für Schichtdicken im µm-Bereich. Hier ergeben sich große Schichtdickentoleranzen. Derartig hergestellte Durchflußzellen weisen schlecht reproduzierbare Durchfluß- bzw. Meßräume mit Totzonen sowie eine unzufriedenstellende Planparallellität der optischen Fenster und eine ungenügende Schichtdickenpräzision auf. Heutzutage werden nahezu ausschließlich auf dem Prinzip der Fouriertransformation basierende IR-Spektrometer verwendet, die hinsichtlich Schnelligkeit und Meßgenauigkeit deutliche Vorteile gegenüber konventionellen Spektrometern aufweisen. Entsprechend hoch sind die Anforderungen an den optischen Probenraum hinsichtlich präziser Fertigung und der damit verbundenen erreichbaren Meßgenauigkeit. Vor allem für die Vergleichbarkeit und Übertragbarkeit von Meßergebnissen stark absorbierender Proben (z.B. wässrige Lösungen) von verschiedenen Meßzellen ist eine hohe Präzision und Reproduzierbarkeit der Schichtdicke der Meßzellen und der Planparallelität der optischen Fenster von großer Bedeutung (siehe Ramelow: "Fourier-Transformations-InfrarotSpektroskopie - Von der Signalverarbeitung bis zur Sekundärstrukturbestimmung von Proteinen", HochschulVerlag, 1995). Die Übertragbarkeit von Meßergebnissen auf Meßsysteme gleicher Art gewinnt im Hinblick auf z.B. Nutzung von Spektraldatenbanken und dem Einsatz automatisierter Systeme eine immer größer werdende Bedeutung.

Angesichts der obigen Nachteile ist es eine Aufgabe der Erfindung, ein Verfahren zur Herstellung von hochpräzisen und druckbeständigen Durchflußmeßzellen vorzuschlagen, welche sich insbesondere für die präzise und reproduzierbare Bestimmung von stark absorbierenden Proben, wie beispielsweise von wässrigen Proben, mittels IR-Spektroskopie in Transmission eignen.

Die Aufgabe wird durch ein Verfahren mit den in Anspruch 1 genannten Merkmalen gelöst. Bevorzugte Ausführungsformen sind Gegenstand der abhängigen Ansprüche.

Gemäß der Erfindung umfaßt ein Verfahren zur Herstellung einer Durchflußmeßzelle zur spektroskopischen Vermessung hindurchzuleitender Proben folgende Schritte:
(a) Bereitstellen eines ersten und eines zweiten Fensters, wobei das zweite Fenster zumindest zwei Probendurchflußkanäle zum Zu- bzw. Abführen der zu vermessenden Probe aufweist;
(b) Aufbringen einer strukturierten Dünnschicht auf eines der Fenster;
(c) Inkontaktbringen und flüssigkeitsdichtes Fixieren der Dünnschicht an dem anderen der Fenster derart, daß einander zugewandte, planparallel verlaufende Fensterflächen der Fenster und die Dünnschicht einen Durchflußraum begrenzen, welcher lediglich durch die Probendurchflußkanäle zugänglich ist, wobei die Fenster zumindest im Bereich des Durchflußraums zumindest bereichsweise optisch transparent sind; und
(d) zumindest bereichsweises Ausgießen eines Ausgußraums zwischen den Fenstern, welcher von dem Durchflußraum durch die Dünnschicht getrennt ist und an die strukturierte Dünnschicht angrenzt, mit Klebstoff.

Bei der erfindungsgemäßen Durchflußzelle handelt es sich um eine nicht zerlegbare Dünnschichtzelle, bei deren Herstellung vorzugsweise mikromechanische bzw. planarlithografische Strukturierungstechniken Verwendung finden. Die Durchflußzelle umfaßt zwei vorzugsweise plattenförmige Fenster mit vorzugsweise planen Fensterflächen, welche jeweils zumindest einen im infraroten Spektralbereich transparenten Abschnitt aufweisen. Die zu vermessende flüssige Probe wird durch zumindest einen Probendurchflußkanal des zweiten Fensters (sogenanntes Durchflußkopffenster) in einen spaltförmigen Durchflußraum zwischen einander zugewandten, planparallel verlaufenden Fensterflächen der Fenster geleitet. Durch einen zweiten Probendurchflußkanal kann die zu vermessende Probe aus dem Durchflußraum abgeführt werden. Der Durchflußraum ist zumindest bereichsweise optisch zugänglich, so daß die zwischen den planparallelen Fensterflächen der beiden Fenster eingeschlossene Probe in Transmission spektroskopisch vermessen werden kann. Hierbei kann beispielsweise ein Fourierspektrometer zum Einsatz kommen.

Das erfindungsgemäße Herstellungsverfahren der Durchflußzelle zeichnet sich insbesondere durch die exakte und reproduzierbare geometrische Definition des Durchfluß- bzw. Probenraums aus. Hierzu wird auf einem der Fenster eine strukturierte Dünnschicht angebracht, welche den Durchflußraum entlang des Spalts zwischen den planparallelen Fensterflächen begrenzt. Die Dünnschicht wird vorzugsweise mit mikromechanischen bzw. planarlithographischen Strukturierungstechniken auf eine der Fensterflächen aufgebracht. Anschließend wird das andere Fenster derart an das erste Fenster angenähert, daß die einander zugewandten planen Fensterflächen parallel zueinander verlaufen und die Fensterfläche des einen Fensters mit der strukturierten Dünnschicht in Kontakt gelangt. Die Verbindung zwischen Dünnschicht und Fensterfläche wird derart bewerkstelligt, daß die Dünnschicht flüssigkeitsdicht an den Fensterflächen der beiden Fenster fixiert ist. Die strukturierte Dünnschicht bildet somit eine innig mit den Fensterflächen verbundene, flüssigkeitsdichte Sperrschicht, welche den Durchflußraum in der Spaltebene zwischen den Fenstern begrenzt. Der Durchfluß- bzw. Probenraum ist somit lediglich durch die Probendurchflußkanäle zugänglich.

Die strukturierte Dünnschicht trennt den Durchflußraum von einem spaltartigen Ausgußraum, welcher ebenfalls durch die planparallelen Fensterflächen begrenzt wird. Zur dauerhaften und exakten Festlegung der Positionsausrichtung der beiden Fenster zueinander wird der Ausgußraum zumindest bereichsweise mit Klebstoff ausgegossen. Der Klebstoff benetzt die einander zugewandten Fensterflächen des Ausgußraums und vorzugsweise auch die den Spaltbereich begrenzende strukturierte Dünnschicht. Nach dem Abbinden des Klebstoffs liegt eine druckbeständige und reproduzierbar herstellbare Durchflußmeßzelle vor, welche sich in hervorragender Weise zur infrarotspektroskopischen Vermessung wässriger Proben eignet. Durch das flüssigkeitsdichte Fixieren der Dünnschicht an beiden Fensterflächen besteht kein Spalt zwischen den Fensterflächen und der Dünnschicht, durch welchen bei dem nachfolgenden Ausgießschritt Klebstoff in den Durchflußraum bzw. in den Spalt eindringen könnte.

Die Funktion des abgeschlossenen Durchflußraumes dient insbesondere zur definierten Klebstoffführung in Schritt (d), so daß ein Eindringen des Klebstoffes durch Kapillarkräfte oder unter Druck in den Durchflußraum verhindert wird. Wenn zwischen der strukturierten Dünnschicht und dem zweiten Fenster keine dichte Verbindung besteht, so kann ein Eindringen des Klebstoffes durch Kapillarkraft in den (Nano-)Spalt zwischen strukturierter Dünnschicht und Durchflußkopf nicht ausgeschlossen werden. Es resultiert eine unzureichned definierte Klebstoffgrenzschicht. Wenn die Dünnschicht nach Abbinden des Klebstoffs entfernt werden soll, würde in diesem Fall eine unzufriedenstellende Durchflußgeometrie vorliegen. Das erfindungsgemäße Verfahren ermöglicht im Gegensatz dazu die Ausbildung von glatten Begrenzungsflächen des Druchflußraums ohne Totzonen.

Durch die vorgegebene Struktur der Klebstofffläche (indirekte Strukturierung des Klebstoffes) werden an den Klebstoff vorteilhafterweise keine Anforderungen hinsichtlich der Fähigkeit zur Mikrostrukturierung gestellt. Dadurch kann eine Vielzahl von Klebstoffen verwendet werden, die bei bestimmten Applikationen, wie beispielsweise dem Einsatz aggressiver Lösungsmittel, hohe Druck- oder Temperaturbeständigkeit, entsprechend den Anforderungen wie Lösungsmittelbeständigkeit, Elastizität oder Haftung optimiert sind. Typische Klebstoffe für diese Anwendung sind Ein- oder Mehrkomponentensysteme wie beispielsweise Polyamide, Polyester-Urethane, Epoxide, Polyacrylate (PMMA), Cyanoacrylate, Silikone und Polyimide. Die Aushärtung des Klebstoffs kann durch Licht (z.B. UV und/oder VIS) Wärme, Luftfeuchtigkeit, anaerob, mittels Metallkontakt und/oder mit Aktivator zur Reaktion gebracht werden. Der Aktivator (ein- oder beidseitig auf die Fenster aufgebracht) kann die Härtung radikalisch, anionisch oder kationisch auslösen. Kombinationen sind auch möglich, z.B. UV- + anaerob härtend, dadurch können beispielsweise Bereiche erreicht werden, die mit Licht nicht zugänglich sind und durch das sekundäre System aushärten. Klebstoffe können beispielsweise durch Zusatz von langkettigen Alkoholen elastifiziert sein, um Spannungen bei Druckbelastungen besser auszugleichen. Kleber können elektrisch leitend sein, um beispielsweise für elektrochemische Messungen als Elektrode zu dienen.

Zur Herstellung der Fenster finden vorzugsweise IR-transparente Materialien, wie beispielsweise Calciumfluorid, Bariumfluorid, Zinkselenid, Zinksulfid, Silizium, Germanium, Kaliumbromid, Natriumchlorid und/oder Silberhalogenide Verwendung. Ferner können verschiedene Materialien über Polymerbeschichtungen für entsprechende Applikationsanforderungen, wie beispielsweise Wasserunlöslichkeit oder Biokompatibilität, optimiert werden. Mögliche Polymere sind beispielsweise Parylen, PTFE und PE.

Mithilfe der Mikrostrukturierung der Dünnschicht lassen sich beliebige, für bestimmte Aufgabenstellungen maßgeschneiderte Durchflußgeometrien realisieren, die einen möglichst kleinen, totzonenfreien optischen Durchfluß- bzw. Meßraum gewährleisten. Beispielsweise ist es möglich, Durchflußräume mit einem Volumen von weniger als 10 nl zu realisieren. Daraus resultieren ein geringer Probenbedarf und eine geringere Gefahr der Kreuzkontamination mit der vorangehenden bzw. nachfolgenden Probe. Ferner lassen sich die Spülzeiten und Volumina zwischen zwei Messungen deutlich reduzieren. Im Hinblick auf einen automatisierten Hochdurchsatz-Einsatz, wie beispielsweise für Pharmascreening oder bei der Vermessung von teuren Proben, wie beispielsweise schwer exprimierbare Proteine, weisen nach dem erfindungsgemäßen Verfahren hergestellte Durchflußmeßzellen gegenüber herkömmlichen Durchflußmeßzellen somit erhebliche Vorteile auf.

Mit dem Verfahren lassen sich Meßzellen als nicht zerlegbare Einheiten herstellen, die eine hohe Druckbeständigkeit und eine hohe Beständigkeit gegen Druckwechselbelastungen im Bereich von 0 (Vakuum von außen) bis 400 bar mit extrem kurzen Druckrelaxationszeiten gewährleisten. Als Druckrelaxationszeit ist die Zeit zu verstehen, welche die Meßzelle beim Übergang vom druckbelasteten in den unbelasteten Zustand benötigt, um ihre ursprüngliche Schichtdicke wieder herzustellen. Die Anforderungen an präzise Meßzellen liegen dabei bei einer Schichtdickenkonstanz zwischen Referenz- und nachfolgender Probenmessung von kleiner 1 nm (siehe Ramelow: "Fourier-Transformations-InfrarotSpektroskopie - Von der Signalverarbeitung bis zur Sekundärstrukturbestimmung von Proteinen", HochschulVerlag, 1995), so daß IR-spektroskopisch keine meßbaren Fehler nachzuweisen sind. Es gilt, etwa für kinetische Messungen oder für den automatisierten Hochdurchsatz-Einsatz, diesen Zustand möglichst schnell zu erreichen (schnelle Druckrelaxation). Mit dem erfindungsgemäßen Verfahren hergestellte Durchflußmeßzellen liegen im unteren Millisekundenbereich. Im Gegensatz dazu zeigen herkömmliche zerlegbare Meßzellen zeigen eine deutlich schlechtere Druckrelaxation von mehreren Sekunden bis Minuten, wobei in der Regel eine IR-spektroskopisch meßbare Abweichung von der Ursprungsschichtdicke (Schichtdicke vor der Druckbelastung) verbleibt.

Ferner ist bei den gemäß dem erfindungsgemäßen Verfahren hergestellten Meßzellen die Zelldichtigkeit auch bei höheren Temperaturen, z.B. beim Messen von Temperaturrampen, gewährleistet. Herkömmliche zerlegbare Meßzellen zeigen eine ausreichende Dichtigkeit nur bis ca. 60°C. Je nach Wahl des Klebstoffes können die erfindungsgemäßen Meßzellen von -60°C bis +230°C bevorzugt von +4 bis +90°C eingesetzt werden.

Die mikrosystemtechnische Fertigung der hier beschriebenen Meßzellen erfolgt vorzugsweise unter Reinraumbedingungen und gewährleistet eine nahezu staubfreie Umgebung bei der Fertigung, wodurch eine besonders hohe Schichtdickenpräzision erreicht werden kann.

Gemäß einer bevorzugten Ausführungsform des erfindungsgemäßen Verfahrens umfaßt das flüssigkeitsdichte Fixieren der Dünnschicht an dem anderen der Fenster ein Erweichen der Dünnschicht zur temporären Erniedrigung von deren Viskosität durch Temperaturerhöhung der Dünnschicht und/oder Anpreßdruckerhöhung der Dünnschicht an das andere Fenster. Vorzugsweise wird die innige, flüssigkeitsdichte Verbindung der Dünnschicht mit der Fensterfläche durch ein An- bzw. Aufschmelzen der Dünnschicht erzielt. Durch das Erweichen der Dünnschicht wird dessen Viskosität derartig erniedrigt, daß die Fensterfläche des angenäherten Fensters von der erweichten Dünnschicht vollständig benetzt wird, um nach einem Abkühlen eine innige, flüssigkeitsdichte Verbindung zu bilden. Bei Auswahl von geeigneten Dünnschichtmaterialien kann eine Viskositätsemiedrigung auch durch eine Anpreßdruckerhöhung der Dünnschicht an das andere Fenster herbeigeführt werden. Die innige, flüssigkeitsdichte Verbindung der Dünnschicht mit den beiden Fensterflächen ermöglicht eine präzise und reproduzierbare Definition des Durchflußraums sowie eine flüssigkeitsdichte Abschottung dieses Raums gegenüber dem Ausgußraum.

Vorzugsweise sollte die Dünnschicht aus einem Material bestehen, welches hinsichtlich der Gestaltung des Durchflußraumes vielfältige Strukturen bzw. Mikrostrukturen ermöglicht und gleichzeitig ein flüssigkeitsdichtes Abschließen zwischen dem ersten Fenster (Spacerfenster) und dem zweiten Fenster (Durchflußkopffenster) gestattet. Vorzugsweise sollte das Material durch ein geeignetes Lösungsmittel wieder entfernbar sein. Als Beispiele für Materialien sind Photoresiste, Lacke und Kunststoffe vorstellbar. Zum Aufbringen bzw. Strukturieren der Dünnschicht werden vorzugsweise Verfahren wie Fotolithographie oder Siebdruck verwendet.

Gemäß einer weiteren Ausführungsform der Erfindung besteht die Dünnschicht aus einem viskosen Material mit einer Viskosität von mindestens 10.000 mPas bei einer Temperatur von 20 °C und das flüssigkeitsdichte Fixieren der Dünnschicht an dem anderen der Fenster umfaßt den Schritt eines Andrückens der viskosen Dünnschicht an das andere Fenster.

Bei dieser Ausführungsform des erfindungsgemäßen Verfahrens besteht die strukturierte Dünnschicht aus einem vergleichsweise hochviskosen Material, welches beim Inkontaktbringen bzw. Anpressen der anzunähernden Fensterfläche diese in einer Weise benetzt, daß eine flüssigkeitsdichte und spaltlose Verbindung zwischen Dünnschicht und Fenster entsteht. Somit kann in einem nachfolgenden Ausgießschritt kein Klebstoff durch einen eventuellen Spalt von dem Ausgußraum in den Durchflußraum gelangen. Alternativ kann auch ein niedrigviskoses Material eingesetzt werden, daß nach der spaltlosen Verbindung zwischen Dünnschicht und Fenster durch eine weitere Behandlung, wie z. B. Erwärmung (z.B. Viskositätserhöhung durch Lösungsmittelverdampfung aus dem Material) oder Belichtung, in einen hochviskosen und formstabilen Zustand gebracht werden kann. Besonders bevorzugt kommen hierbei lichthärtende Klebstoffe zum Einsatz, welche durch Lichteinwirkung von einem niedrigviskosen in einen hochviskosen Zustand gebracht werden. Die Klebstoffe können beispielsweise durch ein Siebdruckverfahren aufgebracht werden.

Gemäß einer besonders bevorzugten Ausführungsform der Erfindung wird eine strukturierte Abstandshalterschicht mit vorbestimmter Schichtdicke auf eine der Fensterflächen von zumindest einem der Fenster aufgebracht, wobei die Abstandshalterschicht mit der Fensterfläche des anderen Fensters in Schritt (c) in Kontakt tritt, so daß der Abstand zwischen den Fensterflächen durch die Schichtdicke der Abstandshalterschicht festgelegt wird. Bei dieser erfindungsgemäßen Ausführungform wird zusätzlich zu der strukturierten Dünnschicht, welche im wesentlichen für die geometrische Definition des Durchflußraums zuständig ist, eine gesonderte Abstandshalterschicht auf eine der Fensterflächen aufgebracht. Die Hauptfunktion der Abstandshalterschicht ist einen reproduzierbaren vorbestimmten und planparallelen Abstand zwischen den Fensterflächen der Fenster sicherzustellen.

Zum Aufbringen der Abstandshalterschicht werden vorzugsweise Methoden wie Sputtern, Aufdampfen, Ionenplattieren, PVD, CVD, PECVD, naßchemische Metallabscheidung und/oder lasergestützte Materialabscheidung verwendet, welche eine hohe Genauigkeit und Reproduzierbarkeit hinsichtlich der Materialabscheidung gewährleisten. Bedingt geeignet sind ferner Siebdrucktechniken sowie fotolithographische Verfahren. Besonders vorteilhaft sind Methoden, bei welchen die aufgebrachte Materialdicke exakt steuerbar ist, so daß reproduzierbar vorbestimmte Abstandshalterschichtdicken erzielbar sind. Die Abstandshalterschicht ist vorzugsweise thermisch oder unter Druck nicht verformbar. Auf diese Weise läßt sich die Spaltdicke des optischen Durchflußraums reproduzierbar und genau einstellen.

Mit den oben genannten bevorzugten Herstellungstechniken lassen sich Schichtdicken über einen bevorzugten Bereich von 0,5 bis 100 µm, mehr bevorzugt 1 bis 50 µm am meisten bevorzugt von 3 bis 15 µm präzise und reproduzierbar einstellen. Die daraus resultierende, ebenfalls hohe Parallelität der optischen Fenster zueinander (gleiche Schichtdicke an jedem Ort innerhalb der Durchflußzelle) ermöglicht eine sehr genaue quantitative Vermessung der Probe, da störende optische Effekte, wie beispielsweise Lichtstreuung, Reflexion oder Strahlinhomogenität beim Strahlendurchgang minimiert werden. Die gemäß dem erfindungsgemäßen Verfahren hergestellten Durchflußmeßzellen ermöglichen somit eine präzise Kalibrierung sowie eine hohe Reproduzier- und Vergleichbarkeit von Messungen, die in verschiedenen Meßzellen aufgenommen wurden. Insbesondere die Übertragbarkeit von Messungen gleicher Meßsysteme spielt eine immer größere Rolle in der spektrokopischen Anwendung, wie z.B. Spektrendatenbanken.

Ein weiterer wesentlicher Vorteil der erfindungsgemäßen Durchflußmeßzellen ist die Gewährleistung einer gleichmäßigen Flüssigkeitsströmung innerhalb des spaltförmigen Durchflußraums, so daß die Fenster vorzugsweise eine hohe Parallelität zueinander aufweisen sollten. In einer gekeilten Anordnung der Fenster kann es in dem spaltförmigen Durchflußraum im Bereich von dessen kleinster Spaltdicke zu schlecht durchströmten Zonen (sogenannten Totzonen) kommen. Durch die Abstandshalterschicht wird reproduzierbar gewährleistet, daß die ebenen Fensterflächen planparallel zueinander ausrichtbar sind, ohne daß aufwendige Fensterpositionierungseinrichtungen notwendig wären.

Vorzugsweise wird die Abstandshalterschicht in einem Randbereich des Fensters aufgebracht. Eine derartige Anordnung der Abstandshalterschicht sichert in besonders effizienter Weise eine hohe Planparallelität der beabstandeten Fensterflächen. Gleichzeitig ist die Abstandshalterschicht vergleichsweise weit von dem vorzugsweise im Zentralbereich der Fensterflächen auszubildenden Durchflußraum beabstandet, so daß ein verhältnismäßig großer Ausgußraum entsteht. Dies ermöglicht eine großflächige Verklebung der Fenster durch Ausgießen des Ausgußraums.

Vorzugsweise weist die Dünnschicht eine geschlossene ringförmige Gestalt auf. Die ringförmige Gestalt der Dünnschicht ist hierbei bezüglich der Probendurchflußkanäle derart positioniert, daß diese bevorzugt sehr nahe an der Dünnschicht liegen, um nachteilige Totzonen zu minimieren. Mit Hilfe mikrosystemtechnischer Strukturierungsverfahren lassen sich auch komplexe Durchflußgeometrien aufbauen, die an die jeweiligen Anforderungen, z. B. der Integration von Elektroden, angepaßt sind.

Vorzugsweise weist zumindest eines der Fenster zumindest einen Klebstoffkanal zum Zuführen des Klebstoffs in den Ausgußraum auf. Besonders bevorzugt ist eine Ausführungsform mit zwei Klebstoffkanälen, bei welcher der zweiter Klebstoffkanal als Klebstoffauslaßöffnung dient. Ebenfalls besonders bevorzugt ist eine Ausführungsform mit zwei Klebstoffkanälen, bei welcher beide Kanäle als Klebstoffeinlässe dienen und die Abstandshalterschicht an geeigneten Stellen unterbrochen ist, wobei diese Stellen als Klebstoffauslässe dienen. Der Klebstoff wird entweder über Druckbeaufschlagung in den Ausgußraum eingepreßt oder über den Kapillareffekt eingebracht.

Vorzugsweise wird die Dünnschicht nach Schritt (d) entfernt. Dies kann bei Dünnschichten, welche lösungsmittellöslich sind, beispielsweise durch Spülen des Durchflußraums mit einem Lösungsmittel erfolgen. Bevorzugt liegt der Abstand der Fensterflächen nach Schritt (d) im Bereich von 0,5 bis 100 µm, bevorzugt 1 bis 15 µm und am meisten bevorzugt 3 bis 15 µm.

Die Erfindung wird nachfolgend mit Bezug auf begleitende Zeichnungen eines bevorzugten Ausführungsbeispiels beispielhaft beschrieben. Es zeigt:
- Fig. 1: Herstellungsstadien einer Durchflußmeßzelle während einer bevorzugten Ausführungsvariante des erfindungsgemäßen Herstellungsverfahrens in schematischer Aufsicht (linke Spalte) und schematischem Schnitt (rechte Spalte);
- Fig. 2: schematische Schnittansichten von verschiedenen Herstellungsstadien einer Durchflußmeßzelle während einer Variante des erfindungsgemäßen Herstellungsverfahrens; und
- Fig. 3: schematische perspektivische Ansicht einer Meßzelleneinrichtung mit einer erfindungsgemäßen Durchflußmeßzelle.

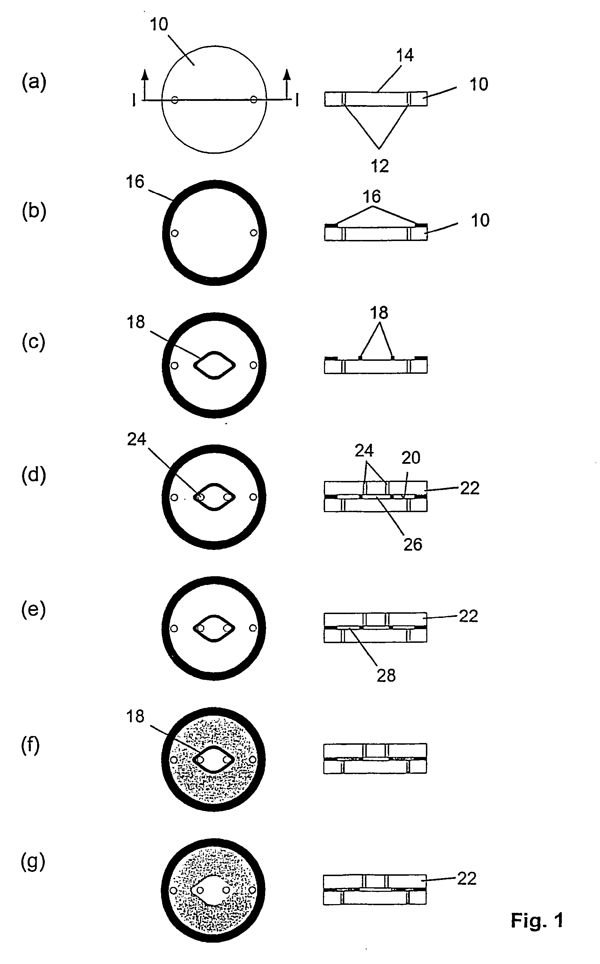

In **Fig. 1 (a)** bis **(g)** sind jeweils in schematischen Aufsichten und Querschnittsansichten entlang der Linie I-I wesentliche Verfahrensstadien einer bevorzugten Variante des erfindungsgemäßen Herstellungsverfahrens von Durchflußmeßzellen gezeigt. Wie in Fig. 1 (a) dargestellt ist, kommt bei diesem bevorzugten Verfahren ein IR-transparentes Fenster 10 zum Einsatz, welches zwei Klebstoffkanäle 12 aufweist. Vorzugsweise durch mikromechanische oder planarlithographische Strukturierungstechniken wird auf einer planen Fensterfläche 14 des Fensters 10 eine ringförmige Abstandshalterschicht 16 definiert, welche vorzugsweise aus einem im wesentlichen inkompressiblen und thermisch weitestgehend nicht verformbaren Material (beispielsweise einem Metall) besteht (Fig. 1(b)). Die Schichtdicke der Abstandshalterschicht 16 wird derart gesteuert, daß sie dem gewünschten späteren Spaltabstand zwischen den beiden planparallelen Fenstern entspricht.

Nachfolgend wird, wie in Fig. 1 (c) dargestellt ist, eine strukturierte Dünnschicht 18 auf die Fensterfläche 14 des Fensters 10 aufgebracht. Die Dünnschicht 18 weist eine ringförmige Gestalt auf und dient zur geometrischen Definition des Durchflußraums. Die Schichtdicke der Dünnschicht 18 ist nicht kleiner als diejenige der Abstandshalterschicht 16, so daß sie mit einer Fensterfläche 20 eines zweiten Fensters 22 bei dessen Annäherung an das Fenster 10 in Kontakt treten kann. In dem Fenster 22, welches auch als Durchflußkopffenster bezeichnet wird, sind zwei Probendurchflußkanäle 24 gebildet, durch welche die Flüssigprobe in einen Durchflußraum 26 ein- bzw. ausgelassen werden kann. Der Durchflußraum 26 ist lateral (d.h. in der Spaltebene) durch die ringförmige Dünnschicht 18 begrenzt und lediglich durch die Probendurchflußkanäle 24 mit der Außenwelt verbunden. Die ringförmige Dünnschicht 18 trennt den Durchflußraum 26 von einem Ausgußraum 28, welcher an die Dünnschicht 18 angrenzt (Fig. 1(d)).

Nach dem Inkontaktbringen der Fensterfläche 20 an die Dünnschicht 18 und die Abstandshalterschicht 16 wird vorzugsweise durch einen Aufweich- bzw. Haft- bzw. Verformungsprozeß der Dünnschicht eine innige, flüssigkeitsdichte Anhaftung an die Fensterfläche 20 generiert, so daß zwischen der Dünnschicht 18 und der Fensterfläche 20 kein Spalt verbleibt. Gleichermaßen darf auch zwischen der Dünnschicht 18 und der Fensterfläche 14 des Fensters 10 kein Spalt verbleiben. In diesem in Fig. 1(e) gezeigten Zustand ist der Ausgußraum 28 hermetisch und spaltfrei von dem Durchflußraum 26 getrennt.

In diesem Zustand wird, wie in Fig. 1(f) dargestellt ist, ein Klebstoff durch einen der Klebstoffkanäle 12 in den Ausgußraum 28 eingepreßt, bis dieser vollständig mit Klebstoff gefüllt ist. Der Klebstoff grenzt hierbei an die ringförmige Dünnschicht 18 vollständig an. In einem optionalen nachfolgenden Schritt kann, wie in Fig. 1 (g) gezeigt ist, die Dünnschicht 18 entfernt werden, so daß der Durchflußraum 26 nunmehr in Spaltebene von der Klebstoffschicht begrenzt wird. In Fig. 1 ist der Klebstoff durch eine graue Hinterlegung hervorgehoben.

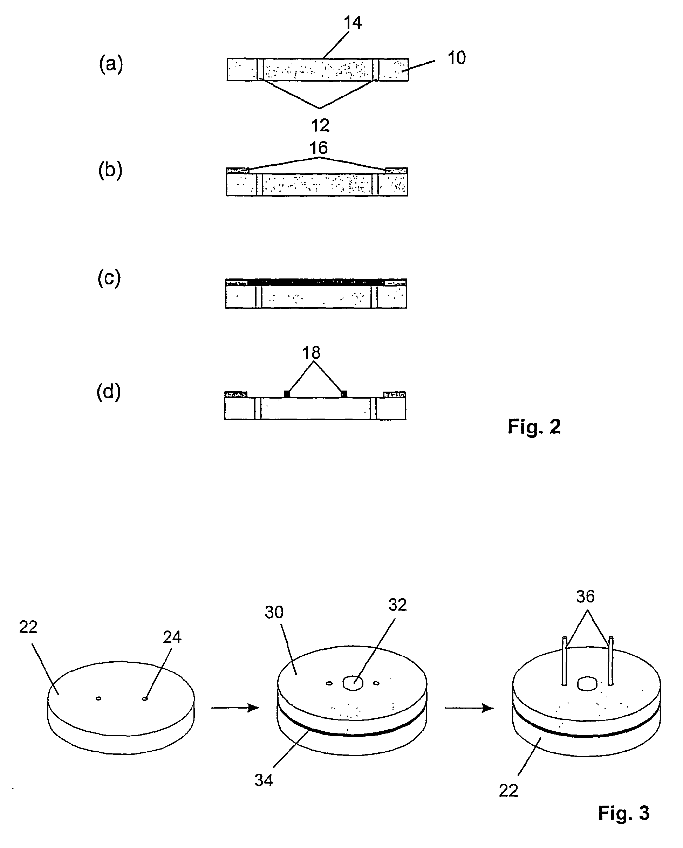

In **Fig. 2** ist die in Fig. 1(a) bis (c) gezeigte Schrittabfolge in einer besonders bevorzugten Ausführungsform noch einmal im Detail dargestellt. Auf das in Fig. 2 (a) dargestellte Fenster 10 wird beispielsweise mittels Siebdrucktechnik oder einer Aufdampf- bzw. Sputtertechnik und lithographische Strukturierung zunächst die Abstandshalterschicht 16 mit definierter Schichtdicke aufgebracht. Anschließend wird die Fensterfläche 14 mit einer Fotolackschicht (Resist) mit definierter Schichtdicke mittels einer Lackschleuder (spin-coating) beschichtet. Die Lackschichtdicke ist hierbei geringfügig größer als diejenige der Abstandshalterschicht 16. In Fig. 2(d) ist die fertig strukturierte Dünnschicht 18 nach Abschluß des folgenden Lithographie-und Entwicklungsschritts dargestellt.

Der Aufbau der fertigen Meßzelleneinrichtung (des Durchflußkopfes) erfolgt vorzugsweise in der in **Fig. 3** dargestellten Form. Eine Metallplatte 30 mit mindestens zwei Bohrungen für die Probendurchflußkanäle 12 und mit mindestens einer Aussparung 32 für den optischen Strahlengang wird vorzugsweise mit dem Fenster 22 derart verbunden, daß die Bohrungen der Metallplatte 30 vorzugsweise paßgenau oder über Kanäle in dem Fenster 22 oder in der Metallplatte 30 oder einem Dichtmaterial 34 miteinander verbunden sind. Das Abdichten zwischen dem Fenster 22 und der Metallplatte 30 kann durch Verkleben oder durch Dichtungen 34 erfolgen. Die Anschlüsse an den Ein- und Auslässen können dergestalt sein, daß paßgenaue Kapillaren 36 durch die Bohrungen der Metallplatte 30, des Dichtmaterials 34 und des Fensters 22 geführt werden und durch HPLC-Anschlüsse, die in der Metallplatte 30 vorhanden sind oder durch Kleben druckdicht und möglichst totzonenfrei abgeschlossen sind. Vorzugsweise schließen die Kapillaren 36 dabei plan mit der Fensterunterseite 20 ab, d.h. enden direkt vor der Dünnschicht.

### Bezugszeichenliste

- 10: Fenster (Spacerfenster)
- 12: Klebstoffkanäle
- 14: Fensterfläche des Fensters 10
- 16: Abstandshalterschicht
- 18: strukturierte Dünnschicht
- 20: Fensterfläche des Fensters 22
- 22: Fenster (Durchflußkopffenster)
- 24: Probendurchflußkanäle
- 26: Durchfluß- bzw. Probenraum
- 28: Ausgußraum
- 30: Metallplatte
- 32: Aussparung
- 34: Dichtmaterial
- 36: Kapillaren

## Patentansprüche

1. Verfahren zur Herstellung einer Durchflußmeßzelle zur spektroskopischen Vermessung hindurchzuleitender Proben, wobei das Verfahren folgende Schritte umfaßt:
(a) Bereitstellen eines ersten (10) und eines zweiten (22) Fensters, wobei das zweite Fenster (22) zumindest zwei Probendurchflußkanäle (24) zum Zu- bzw. Abführen der zu vermessenden Probe aufweist;
(b) Aufbringen einer strukturierten Dünnschicht (18) auf eines der Fenster (10, 22);
(c) Inkontaktbringen und flüssigkeitsdichtes Fixieren der Dünnschicht. (18) an dem anderen (22, 10) der Fenster derart, daß einander zugewandte, planparallel verlaufende Fensterflächen (14, 20) der Fenster (10, 22) und die Dünnschicht (18) einen Durchflußraum (26) begrenzen, welcher lediglich durch die Probendurchflußkanäle (24) zugänglich ist, wobei die Fenster (10, 22) zumindest im Bereich des Durchflußraums (26) zumindest bereichsweise optisch transparent sind; und
(d) zumindest bereichsweises Ausgießen eines Ausgußraums (28) zwischen den Fenstern (10, 22), welcher von dem Durchflußraum (26) durch die Dünnschicht (18) getrennt ist und an die strukturierte Dünnschicht (18) angrenzt, mit Klebstoff, wobei
das flüssigkeitsdichte Fixieren der Dünnschicht (18) an dem anderen (22, 10) der Fenster ein Erweichen der Dünnschicht (18) zur temporären Erniedrigung von deren Viskosität durch Temperaturerhöhung der Dünnschicht (18) und/oder Anpreßdruckerhöhung der Dünnschicht (18) an das andere (22, 10) Fenster umfaßt, **dadurch gekennzeichnet, daß**
die Dünnschicht (18) nach Schritt (d) entfernt wird.

2. Verfahren nach Anspruch 1, wobei die Dünnschicht (18) aus einem viskosen Material mit einer Viskosität von mindestens 10.000 mPas bei einer Temperatur von 20 °C besteht und das flüssigkeitsdichte Fixieren der Dünnschicht (18) an dem anderen (22, 10) der Fenster den Schritt eines Andrückens der viskosen Dünnschicht (18) an das andere Fenster (22, 10) umfaßt.

3. Verfahren nach einem der vorangegangenen Ansprüche, wobei eine strukturierte Abstandshalterschicht (16) mit vorbestimmter Schichtdicke auf eine der Fensterflächen (14, 20) von zumindest einem der Fenster (10, 22) aufgebracht wird und die Abstandshalterschicht (16) mit der Fensterfläche (20, 14) des anderen Fensters (22, 10) im Schritt (c) in Kontkakt tritt, so daß der Abstand zwischen den Fensterflächen (14, 20) durch die Schichtdicke der Abstandshalterschicht (16) festgelegt wird.

4. Verfahren nach Anspruch 3, wobei die Abstandshalterschicht (16) in einem Randbereich des Fensters (10, 22) aufgebracht wird.

5. Verfahren nach einem der vorangegangenen Ansprüche, wobei die Dünnschicht (18) eine geschlossene ringförmige Gestalt aufweist.

6. Verfahren nach einem der vorangegangenen Ansprüche, wobei zumindest eines der Fenster (10, 22) zumindest einen Klebstoffkanal (12) zum Zuführen des Klebstoffs in den Ausgußraum (28) aufweist.

7. Verfahren nach einem der vorangegangenen Ansprüche, wobei der Abstand der Fensterflächen (14, 20) nach Schritt (d) im Bereich von 0,5 bis 100 µm, bevorzugt 1 bis 50 µm und am meisten bevorzugt 3 bis 15 µm liegt.

## Claims

1. Process for producing a flow cell for the spectroscopic analysis of samples to be passed through, the process comprising the following steps:
(a) provision of a first (10) and of a second (22) window, the second window (22) having at least two sample flow channels (24) for supplying and removing the sample to be analyzed;
(b) application of a structured thin layer (18) to one of the windows (10, 22);
(c) contacting and liquid-tight securing of the thin layer (18) to the other (22, 10) window, in such a way that facing, plane-parallel window surfaces (14, 20) of the windows (10, 22) and the thin layer (18) delimit a flow chamber (26) which is accessible only through the sample flow channels (24), the windows (10, 22) being optically transparent at least in some regions at least in the region of the flow chamber (26); and
(d) filling at least some regions of a filling chamber (28) between the windows (10, 22) which is separated from the flow chamber (26) by the thin layer (18) and adjoins the structured thin layer (18) with adhesive, and
the liquid-tight securing of the thin layer (18) to the other (22, 10) window includes a softening of the thin layer (18) to temporarily lower its viscosity by increasing the temperature of the thin layer (18) and/or by increasing the pressure applied on the thin layer (18) to the other (22, 10) window, **characterized in that**
the thin layer (18) is removed after step (d).

2. Process according to Claim 1, wherein the thin layer (18) consists of a viscous material having a viscosity of at least 10 000 mPas at a temperature of 20°C and the liquid-tight securing of the thin layer (18) to the other (22, 10) window includes the step of pressing the viscous thin layer (18) onto the other window (22, 10).

3. Process according to one of the preceding claims, wherein a structured spacer layer (16) with predetermined layer thickness is applied to one of the window surfaces (14, 20) of at least one of the windows (10, 22), and the spacer layer (16) comes into contact with the window surface (20, 14) of the other window (22, 10) in step (c) in such a way that the distance between the window surfaces (14, 20) is determined by the thickness of the spacer layer (16).

4. Process according to Claim 3, wherein the spacer layer (16) is applied in an edge region of the window (10, 22).

5. Process according to one of the preceding claims, wherein the thin layer (18) has a complete circular shape.

6. Process according to one of the preceding claims, wherein at least one of the windows (10, 22) has at least one adhesive channel (12) for feeding the adhesive into the filling chamber (28).

7. Process according to one of the preceding claims, wherein the distance between the window surfaces (14, 20) after step (d) is in the range from 0.5 to 100 µm, preferably from 1 to 50 µm and most preferably from 3 to 15 µm.

## Revendications

1. Procédé de fabrication d'une cellule de débit pour la mesure spectroscopique d'échantillons qui doivent la traverser, le procédé comportant les étapes suivantes :
(a) Mise à disposition d'une première (10) et d'une deuxième (22) fenêtre, la deuxième fenêtre (22) comportant au moins deux conduits de passage (24) d'échantillons pour alimenter ou pour évacuer l'échantillon à mesurer ;
(b) Application d'une couche mince (18) structurée sur l'une des fenêtres (10, 22) ;
(c) Mise en contact et fixation étanche aux liquides de la couche mince (18) sur l'autre (22, 10) des fenêtres de façon telle, que des surfaces de fenêtres (14, 20) qui se font face des fenêtres (10, 22) s'étendant de façon plane et parallèle et la couche mince (18) délimitent une chambre d'écoulement (26) qui est uniquement accessible par l'intermédiaire des conduits de passage d'échantillons (24), les fenêtres (10, 22) étant optiquement transparentes au moins par zones, dans la région de la chambre d'écoulement (26) ; et
(d) Scellement au moins par zones d'une chambre de remplissage (28) entre les fenêtres (10, 22) qui est séparée de la chambre d'écoulement (26) par la couche mince (18) et qui est adjacente à la couche mince structurée (18) avec de l'adhésif,
la fixation étanche aux liquides de la couche mince (18) sur l'autre (22, 10) des fenêtres comprenant un ramollissement de la couche mince (18) pour l'abaissement temporaire de sa viscosité par augmentation de la température de la couche mince (18) et/ou augmentation de la pression d'appui de la couche mince (18) sur l'autre (22, 10) fenêtre, **caractérisé en ce qu'**on retire la couche mince (18) après l'étape (d).

2. Procédé selon la revendication 1, la couche mince (18) étant en une matière visqueuse avec une viscosité d'au moins 10.000 mPas à une température de 20°C et la fixation étanche aux liquides de la couche mince (18) sur l'autre (22, 10) des fenêtres comprenant l'étape d'une pression de la couche mince visqueuse (18) contre l'autre fenêtre (22, 10).

3. Procédé selon l'une quelconque des revendications précédentes, une couche structurée d'écartement (16), avec une épaisseur de couche prédéfinie étant appliquée sur l'une des surfaces de fenêtres (14, 20) d'au moins l'une des fenêtres (10, 22) et à l'étape (c), la couche d'écartement (16) entrant en contact avec la surface de fenêtre (20, 14) de l'autre fenêtre (22, 10), de façon à déterminer la distance entre les surfaces de fenêtres (14, 20) par l'épaisseur de la couche d'écartement (16).

4. Procédé selon la revendication 3, la couche d'écartement (16) étant appliquée dans une zone de bordure de la fenêtre (10, 22).

5. Procédé selon l'une quelconque des revendications précédentes, la couche mince (18) présentant une configuration annulaire close.

6. Procédé selon l'une quelconque des revendications précédentes, au moins l'une des fenêtres (10, 22) comportant au moins un conduit pour l'adhésif (12) pour alimenter l'adhésif dans la chambre de remplissage (28).

7. Procédé selon l'une quelconque des revendications précédentes, la distance entre les surfaces de fenêtres (14, 20) après l'étape (d) se situant dans la fourchette de 0,5 à 100 µm, de préférence de 1 à 50 µm et de façon la plus préférée de 3 à 15 µm.
